# EUROPÄISCHE PATENTSCHRIFT

(11) **EP 0 547 470 B1**
(45) Veröffentlichungstag und Bekanntmachung des Hinweises auf die Patenterteilung: **23.08.1995**
(21) Anmeldenummer: 92120868.2
(22) Anmeldetag: 08.12.1992
(51) Int. Cl.: F04C 29/02, F16N 39/00

(54) **Verdrängermaschine nach dem Spiralprinzip**
Positive displacement machine of the spiral principle
Machine à déplacement positif selon le principle de la spirale

(30) Priorität: 16.12.1991 CH 3714/91
(43) Veröffentlichungstag der Anmeldung: 23.06.1993
(73) Patentinhaber: AGINFOR AG für industrielle Forschung, CH-5430 Wettingen (CH)
(72) Erfinder: Jetzer, Gregor, CH-5415 Nussbaumen (CH); Kolb, Roland, CH-8105 Regensdorf (CH); Spinnler, Fritz, CH-5507 Mellingen (CH)
(74) Vertreter: Klein, Ernest

(56) Entgegenhaltungen:
- DE-A- 2 739 404
- GB-A- 225 432
- GB-A- 2 206 649
- US-A- 3 313 016

## Beschreibung

### Gebiet der Erfindung

Die Erfindung betrifft eine Verdrängermaschine für kompressible Medien mit mehreren in einem feststehenden Gehäuse angeordneten spiralförmigen Förderräumen und mit einem den Förderräumen zugeordneten Verdrängerkörper, der auf einem gegenüber dem Gehäuse exzentrisch antreibbaren scheibenförmigen Läufer derart gehalten ist, dass während des Betriebes jeder seiner Punkte eine von den Umfangswänden der Verdrängerkammer begrenzte Kreisbewegung ausführt, wozu auf der Antriebswelle eine Exzenterscheibe angeordnet ist, auf welcher der Läufer mittels einer ölgeschmierten Lagerung gelagert ist.

### Stand der Technik

Verdrängermaschinen der Spiralbauart sind beispielsweise durch die DE-C-26 03 462 bekannt. Ein nach diesem Prinzip aufgebauter Verdichter zeichnet sich durch eine nahezu pulsationsfreie Förderung des beispielsweise aus Luft oder einem Luft-Kraftstoff-Gemisch bestehenden gasförmigen Arbeitsmittels aus und könnte daher unter anderem auch für Aufladezwecke von Brennkraftmaschinen mit Vorteil herangezogen werden. Während des Betriebes eines solchen Kompressors werden entlang der Verdrängerkammer zwischen dem spiralförmig ausgebildeten Verdrängerkörper und den beiden Umfangswänden der Verdrängerkammer mehrere, etwa sichelförmige Arbeitsräume eingeschlossen, die sich von dem Einlass durch die Verdrängerkammer hindurch zum Auslass hin bewegen, wobei ihr Volumen ständig verringert und der Druck des Arbeitsmittels dementsprechend erhöht wird.

Eine Maschine der eingangs genannten Art ist bekannt aus der EP 0 354 342. Bei dieser Maschine sowie im übrigen bei allen bekannten Spiralverdichtern, bei denen zur translatorischen Führung des Läufers eine mit der Antriebswelle winkelsynchron laufende Führungswelle vorgesehen ist, erfolgt die Lagerung der Antriebswelle in Wälzlagern. Dies ist besonders gut ersichtlich bei der Verdrängermaschine nach EP 0 354 342, bei welcher die Antriebswelle im Gehäuse in zwei Kugellagern und der auf der Antriebswelle angeordnete Exzenterbund über ein Nadellager gelagert ist.

Diese Art der Abstützung beziehungsweise Lagerung des Läufers ist relativ kostspielig, da aus Platzgründen ein Nadellager ohne inneren Laufring zum Einsatz kommt. Dies erfordert jedoch, dass die Abrollbahn auf dem Exzenterbund gehärtet sein muss, was wiederum die Auswahl für ein günstiges Herstellverfahren der Exzenterwelle einschränkt. Ein günstiges Verfahren ist das Gussverfahren, wenn Sphäroguss verwendet wird. Sphäroguss ist zwar härtbar; es wird indessen nicht die für einen hochbelasteten Wälzlagerbetrieb notwendige Festigkeit in der Laufbahn erzielt, wie dies beispielsweise beim Wälzlagerstahl der Fall ist.

Da überdies infolge der hohen Fliehkraftbelastung und der exzentrischen Bewegung eine Fettdauerschmierung des Wälzlagers ausscheidet, sind diese bekannnten hochbelasteten Nadellager ölgeschmiert, wobei das Öl dem Lager über ein Bohrungssystem in der Antriebswelle zugeleitet wird.

### Darstellung der Erfindung

Ausgehend von der Erkenntnis, dass in Folge der hohen thermischen und mechanischen Belastungen beim Hauptexzenterlager ohne dessen kontinuierliche Schmierung mit einem flüssigen Schmiermittel nicht auszukommen ist, liegt der Erfindung die Aufgabe zugrunde, das Lagerkonzept der Verdrängungsmaschine hinsichtlich einer Kostenoptimierung zu vereinfachen.

Die Aufgabe wird dadurch gelöst, dass für den orbitierenden Läufer auf der rotierenden Exzenterscheibe ein Gleitlager vorgesehen ist, wobei die Ölzufuhr und die Ölabfuhr über eine Bohrung in der Exzenterscheibe erfolgt, und dass innerhalb der Exzenterscheibe Mittel zur luftfreien Ölzufuhr in den Gleitlagerspalt angeordnet sind.

Abgesehen von der Verbilligung der Maschine dadurch, dass neben dem Ersatz eines Wälzlagers durch eine Gleitlager auch dessen geringere radiale Abmessungen zu einer Erhöhung des für die Luftströmung notwendigen Freiraumes führt, ist der besondere Vorteil darin zu sehen, dass durch diese Massnahme auf eine gehärtete Oberfläche der Exzenterscheibe verzichtet werden kann. Die indirekte Beaufschlagung des Schmierspaltes mit Öl über Entgasungsmittel gestattet es, auf einfache Art luftfreies Öl für das hochbelastete Exzenterlager bereitzustellen
Es ist zweckmässig, wenn ein zum Schmierspalt hin offener Hohlraum in der Exzenterscheibe angeordnet ist, und zwar in der Winkelebene, in welcher die Exzenterscheibe ihren grössten Abstand zur Rotationsachse aufweist. Die Ölzufuhr erfolgt vorzugsweise in den Hohlraum über eine Bohrung in der Exzenterscheibe, deren Mündung radial ausserhalb der Rotationsachse der Antriebswelle angeordnet ist. Die Ölabfuhr und gegebenenfalls die Luftabfuhr erfolgt gemeinsam über eine aus dem Hohlraum abzweigende, in der Rotationsachse der Antriebswelle liegende Längsbohrung. Durch diese Massnahme wird das in den Hohlraum einströmende Öl infolge der Fliehkraftwirkung in den Schmierspalt geschleudert, während allenfalls im Öl vorhandene Luft durch die Wirkung dieser Zentrifuge ausgeschieden wird und über die Längsbohrung aus dem Hohlraum abströmt. Daneben bewirkt der Hohlraum in der Exzenterscheibe eine Verkleinerung der rotierenden Masse; Die Antriebswelle wird insgesamt leichter und es ist weniger Fliehkraft auszugleichen, was wiederum zu leichteren Ausgleichmassen führt.

Wenn im Bereich der Radialebene des Schmierspaltes ein Kanal angeordnet ist, der sich in Umfangsrichtung des Schmierspaltes vom Hohlraum aus erstreckt und zwar entgegen der Drehrichtung der Antriebswelle, so ist ein einfaches Mittel geschaffen, um das luftfreie Schmieröl auf direktestem Weg an die am höchsten belastete Stelle des Exzenterlagers zu leiten.

Um eventuell durch die hochbelasteteten Wellendichtringe beidseits des Gleitlagers eindringende Luft abzuführen, ist es angebracht, am Umfang der Exzenterscheibe einen lichten Raum anzuordnen, der sich zwischen den Wellendichtringen erstreckt und der die Ölräume beidseits der Wellendichtringe mit dem Hohlraum verbindet. Dieser lichte Raum ist vorzugsweise von sichelförmiger Form, wobei die Mittellinie der Sichel sich wie jene des Hohlraumes in der Winkelebene befindet, in welcher die Exzenterscheibe ihren grössten Abstand zur Rotationsachse (34) aufweist,

### Kurze Beschreibung der Zeichnung

In der Zeichnung ist ein Ausführungsbeispiel der Erfindung schematisch dargestellt.

Es zeigt:
- Fig. 1: einen Querschnitt durch das antriebsseitige Gehäuseteil der Verdrängermaschine nach Linie I-I in Fig. 2;
- Fig. 2: einen Längsschnitt durch die Verdrängermaschine nach Linie II-II in Fig. 1;
- Fig. 3: eine unbestückte Antriebswelle;
- Fig. 4: einen Querschnitt durch die Antriebswelle nach Linie IV-IV in Fig. 3;
- Fig. 5: einen Teilquerschnitt durch die Exzenterlagerung.

### Weg zur Ausführung der Erfindung

Zwecks Erläuterung der Funktionsweise des Verdichters, welche nicht Gegenstand der Erfindung ist, wird auf die bereits genannte DE-C3-2 603 462 verwiesen. Nachstehend wird nur der für das Verständnis notwendige Maschinenaufbau und Prozessablauf kurz beschrieben.

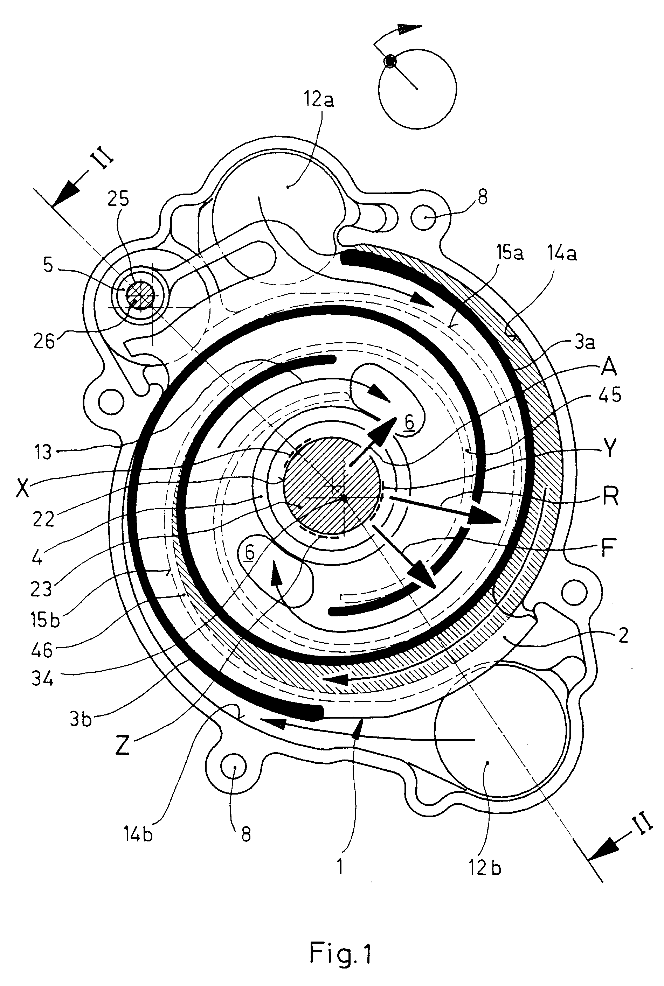

In Fig. 1 ist das Gehäuse mit den Förderräumen und dem eingelegten Verdränger gezeigt. Mit 1 ist der Läufer der Maschine insgesamt bezeichnet. An beiden Seiten der Scheibe 2 sind je zwei, um 180° zueinander versetzte, spiralförmig verlaufende Verdrängerköper angeordnet. Es handelt sich um Leisten 3a, 3b, die senkrecht auf der Scheibe 2 gehalten sind. Die Spiralen selbst sind im gezeigten Beispiel aus mehreren, aneinander anschliessenden Kreisbögen gebildet. Mit 4 ist die Nabe bezeichnet, mit welcher die Scheibe 2 über dem Gleitlager 22 auf einer Exzenterscheibe 23 gelagert ist. Diese Exzenterscheibe ist ihrerseits Teil der Antriebswelle 24.

Mit 5 ist ein radial ausserhalb der Leisten 3a, 3b angeordnetes Auge bezeichnet für die Aufnahme eines Führungslagers 25, welches auf einem Exzenterbolzen 26 aufgezogen ist. Dieser ist seinerseits Teil einer Führungswelle 27. Am Spiralende sind in der Scheibe vier Durchtrittsfenster 6, 6' vorgesehen, damit das Medium von einer Scheibenseite zur andern gelangen kann, beispielsweise um in einem nur einseitig angeordneten zentralen Auslass abgezogen zu werden.

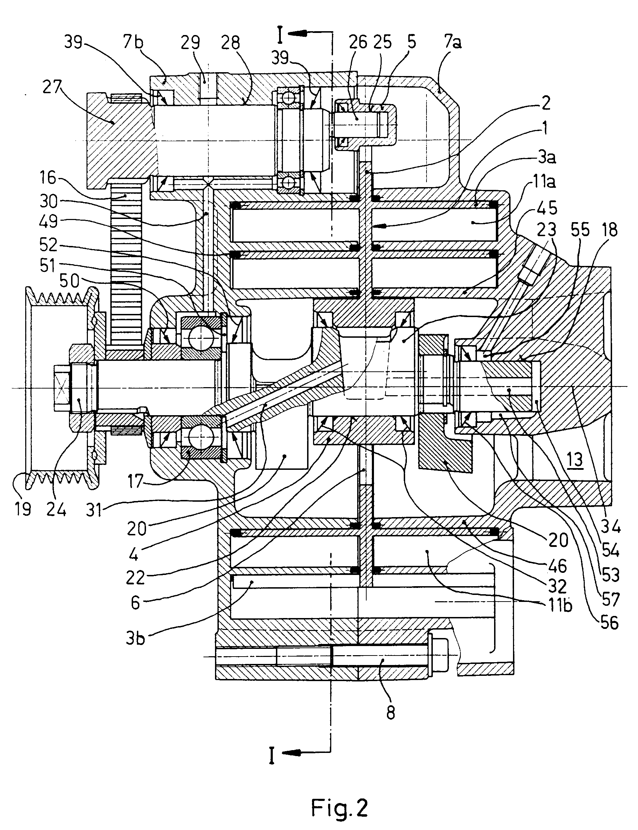

In Fig. 1 ist die in Fig. 2 links dargestellte Gehäusehälfte 7a des aus zwei Hälften 7a, 7b zusammengesetzten, über Befestigungsaugen 8 zur Aufnahme von Verschraubungen miteinander verbundenen Maschineßgehäuses gezeigt. 11a und 11b bezeichnen die zwei jeweils um 180° gegeneinander versetzten Förderräume, die nach Art eines spiralförmigen Schlitzes in die beiden Gehäusehälften eingearbeitet sind. Sie verlaufen von je einem am äusseren Umfang der Spirale im Gehäuse angeordneten Einlass 12a, 12b zu einem im Gehäuseinneren vorgesehenen, beiden Förderräumen gemeinsamen Auslass 13 (Fig. 2). Sie weisen im wesentlichen parallele, in gleichbleibendem Abstand zueinander angeordnete Zylinderwände 14a, 14b, 15a, 15b auf, die im vorliegenden Fall wie die Verdrängerkörper der Scheibe 2 eine Spirale von ca. 360° umfassen. Zwischen diesen Zylinderwänden greifen die Verdrängerkörper 3a,3b ein, deren Krümmung so bemessen ist, dass die Leisten die inneren und die äusseren Zylinderwände des Gehäuses an mehreren, beispielsweise an jeweils zwei Stellen nahezu berühren. An den freien Stirnseiten der Leisten 3a, 3b und der Stege 45, 46 sind Dichtungen 49 in entsprechenden Nuten eingelegt. Mit ihnen werden die Arbeitsräume gegen die Seitenwände des Gehäuses resp. gegen die Verdrängerscheibe gedichtet.

Den Antrieb und die Führung des Läufers 1 besorgen die zwei beabstandeten Exzenteranordnungen 23, 24 resp. 26, 27. Die Antriebswelle 24 ist antriebsseitig in einem Wälzlager 17 und luftseitig in einem Gleitlager 18 gelagert. An ihrem aus der Gehäusehalfte 7a herausragenden Ende ist sie mit einer Keilriemenscheibe 19 für den Antrieb versehen. Auf der Antriebswelle 24 sind Gegengewichte 20 angeordnet zum Ausgleich der beim exzentrischen Antrieb des Läufers entstehenden Massenkräfte. Die Führungswelle 27 ist innerhalb der Gehäusehälfte 7a in ein Gleitlager 28 eingelegt, welches beidseitig mit Ringdichtungen 39 abgedichtet ist. Um in den Totpunktlagen eine eindeutige Führung des Läufers zu erzielen, werden die beiden Exzenteranordnungen über einen Zahnriemenantrieb 16 winkelgenau synchronisiert. Dieser Doppelexzenterantrieb sorgt dafür, dass alle Punkte der Läuferscheibe und damit auch alle Punkte der beiden Leisten 3a und 3b eine kreisförmige Verschiebebewegung ausführen. Infolge der mehrfachen abwechselnden Annäherungen der Leisten 3a,3b an die inneren und äusseren Zylinderwände der zugeordneten Förderkammern ergeben sich auf beiden Seiten der Leisten sichelförmige, das Arbeitsmedium einschliessende Arbeitsräume, die während des Antriebs der Läuferscheibe durch die Förderkammern in Richtung auf den Auslass verschoben werden. Hierbei verringern sich die Volumina dieser Arbeitsräume und der Druck des Arbeitsmittels wird entsprechend erhöht.

Zur Schmierung der in dem Gehäuse 7a, 7b untergebrachten Lager sowie des Hauptexzenterlagers 22 ist ein gemeinsames System vorgesehen. Aus einer nicht dargestellten Schmiermittelquelle wird Schmiermittel, vorzugsweise Oel, über eine Bohrung 29 in der Gehäusehälfte 7b zum Gleitlager 28 geleitet. Beidseits dieses Lagers wird das Oel aufgefangen und über eine Bohrung 30 in den Bereich der Antriebswelle 24 geführt zwischen das Wälzlager 17 und den zugehörigen antriebsseitigen Wellendichtring 50. Von dort durchdringt und schmiert das Öl das Wälzlager 17 und gelangt in einen Ringraum 51, welcher seitlich durch einen weiteren Wellendichtring 52 abgeschlossen ist.

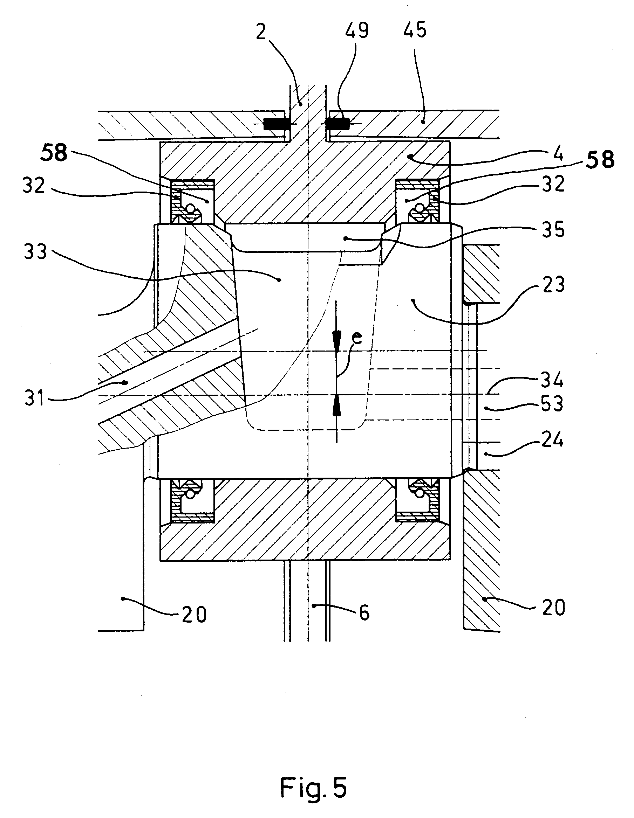

Aus diesem Ringraum 51 wird nunmehr das Exzenterlager 22 angespeist. Dieses Lager ist als einfaches Gleitlager ausgebildet und ist gegen den Innenraum der Maschine über Wellendichtringe 32 abgedichtet, wie dies in Fig.5 erkennbar ist.

Eine direkte Ölzufuhr über Radialbohrungen in der Exzenterscheibe zu den beiden Lagerseiten, wie sie beispielsweise aus der eingangs genannten EP 0 354 342 bekannt ist, wäre im vorliegenden Fall nachteilig. Zum einen würde bereits im Öl enthaltene Luft dessen Schmierfähigkeit beeinträchtigen; zum andern kann zusätzliche Luft über die beidseitig des Lagers vorgesehenen Wellendichtringe in den Lagerraum einströmen. Dies, weil der Innenraum der Maschine - in welchem sich der Exzentertrieb befindet - jenseits der Wellendichtringe während des Betriebes unter Überdruck steht.

Wie aus den Fig. 2 bis 5 ersichtlich, wird das Schmiermittel demzufolge in der Lagermitte in den Schmierspalt eingespeist. Dies geschieht über eine gerade Schrägbohrung 31 in der Exzenterscheibe. Die Schrägbohrung kommuniziert antriebseitig mit dem Ringraum 51 und mündet innerhalb der Scheibe in einen Hohlraum 33. Der Hohlraum ist zum Schmierspalt hin offen. Die Öffnung des Hohlraumes erstreckt sich über einen Umfangsbereich X (Fig. 1) und befindet sich in der Winkelebene, in welcher die Exzenterscheibe ihre grösste radiale Abmessung aufweist. Die Mündung der Schrägbohrung 31 ist in einer Radialebene angeordnet, welche sich ausserhalb der Rotationsachse 34 der Antriebswelle befindet. Anlässlich der Drehung wird das in den Hohlraum einströmende Öl infolge Fliehkraft nach aussen in den Umfangsbereich X geschleudert. Sofern sich Luft im Öl befindet, wird dieses unter der Wirkung der Zentrifuge aus dem Öl ausgeschieden. Diese Luft strömt radial einwärts in das Rotationszentrum des Hohlraumes, welches mit der Rotationsachse 34 der Antriebswelle zusammenfällt. Die Luft und das nicht für die Schmierung benötigte Öl werden sodann über eine zentral in der Antriebswelle angeordnete Längsbohrung 53 aus dem Hohlraum 33 abgeführt.

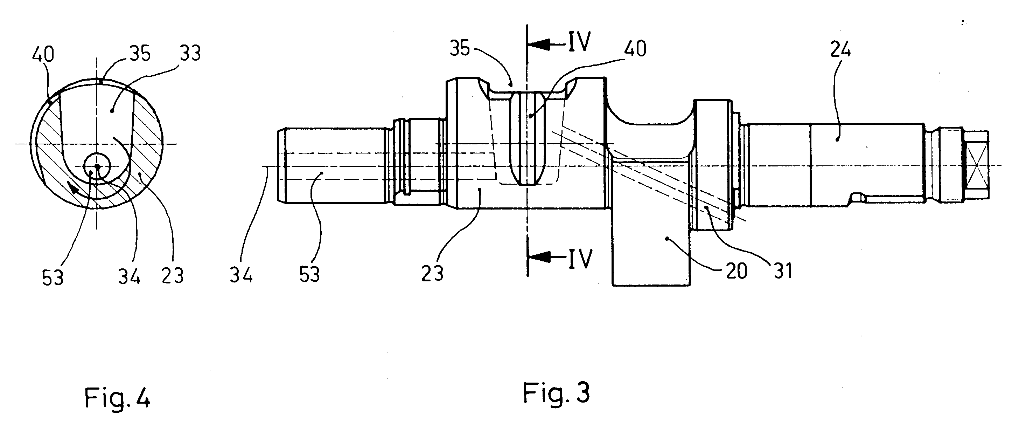

Nun sind selbstverständlich auch Vorkehrungen gegen seitlich durch die Wellendichtringe 32 eintretende Luft zu treffen. Hierzu wird die Exzenterscheibe im Bereich der Wellendichtringe eingestochen zwecks Bildung eines sichelförmigen Raumes 35 (Fig. 4). Dieser Raum befindet sich in der gleichen Winkelebene wie der Umfangsbereich X und erstreckt sich axial zwischen den beiden Wellendichtringen 32. Dabei verbindet er die beidsseits der Wellendichtringe angeordneten Ölräume 58 mit dem Hohlraum 33. Dieser Raum 35 wird auf einfache Weise dadurch hergestellt, dass die Exzenterscheibe an der entsprechenden Stelle von der Rotationsachse als Zentrum mit dem Radius der Exzenterscheibe geschliffen wird. Wie aus Fig.5 ersichtlich, gelangt Luft, welche die hochbelasteten, mit der Exzentrizität e orbitierenden Wellendichtringe 32 durchdringt, damit unter Umgehung des Schmierspaltes direkt aus den Ölräumen 58 in diesen Raum 35 und strömt dann an der Wandung des Hohlraumes 33 entlang radial einwärts in dessen Rotationszentrum.

Im Umfangsbereich X befindet somit quasi luftfreies Öl, welches den Schmierspalt des Gleitlagers beaufschlagt. Es gilt nunmehr, das Öl an jene Lagerstellen heranzuführen, die am höchsten belastet sind.

In Fig. 1 ist die durch die Fliehkraft hervorgerufene Reaktionskraft der Exzenterscheibe mit F bezeichnet. Die durch den Antrieb des Läufers verursachte Reaktionskraft ist mit A bezeichnet. Die daraus resultierende Reaktionskraft ist mit dem Pfeil R dargestellt. Diese Resultante bewirkt im Gleitlagerspalt im Bereich Y die höchste Belastung. Auf die Exzenterscheibe bezogen, ist dieser Bereich Y immer am selben Ort.

Verschiebungen nach oben oder nach unten treten allenfalls durch eine variierende Antriebsleistung respektiv Fliehkraftbelastung auf.

Bei freier Ölführung in einer Exzenterscheibe hat das Öl die Tendenz, bedingt durch das Fliehkraftfeld, in den Bereich X geschleudert zu werden. Dies ist unabhängig von der neuen Massnahme der Hohlraumanordnng. Da bei Exzenterlagerungen das Schmiermittel entgegen der Drehrichtung im Schmierspalt strömt, könnte die Gefahr bestehen, dass aufgrund des langen zurückzulegenden Weges das Öl den Bereich Y ungenügend versorgt. Versuche haben nunmehr ergeben, dass eine genügende Ölversorgung im hochbelasteten Bereich Y dann gegeben ist, wenn das öl in den in Fig. 1 mit Z bezeichneten Bereich eingespeist wird. Bezogen auf das Rotationszentrum und in Drehrichtung gesehen, liegt dieser Bereich Z etwa 90° vor dem höchstbelasteten Bereich Y.

Um diese Ölversorgung sicherzustellen, wird am Aussenumfang der Exzenterscheibe eine Vertiefung angebracht, die einen den Hohlraum 33 und den Bereich Z verbindenden Kanal 40 bildet. Dieser Kanal verläuft, wie in Fig. 4 erkennbar, entgegen der Drehrichtung der Antriebswelle. Das derart aus dem Umfangsbereich X frisch in den Umfangsbereich Z eingespeiste luftfreie Öl behält seine Trag- und Schmierfähigkeit ohne weiteres bis hin in den gefährdeten Umfangsbereich Y. Um den Kanal 40 besser darstellen zu können, ist in Fig. 3 die Antriebswelle 24 gegenüber der Darstellung in Fig. 2 um 180° gedreht, d. h. die Antriebsseite befindet sich im rechten Figurenteil. Auf der in Fig. 3 in vormontiertem Zustand gezeigten Welle ist ebenfalls das in Fig. 2 schraffiert dargestellte Ausgleichgewicht 20 nicht aufgesteckt.

Das aus der Längsbohrung 53 an der luftseitigen Stirnseite der Antriebswelle abströmende Öl hat noch die Aufgabe, das weniger belastete luftseitige Wellenlager 18 zu schmieren.

Dieses Lager ist als Gleitlager ausgebildet und ist beidseitig mit Ölräumen 54, 55 versehen, welche nach aussen dicht abgeschlossen sind. Hierzu wird der antriebsseitige Ölraum 55 durch einen gegen die Antriebswelle wirkenden Wellendichtring 56 begrenzt. Der gegenüberliegende Ölraum 54, in welchen die Längsbohrung 53 mündet, ist durch die Wandung des Gehäuseteils 7a verschlossen. Die beiden Ölräume 54, 55 sind über einen Kanal 57 miteinander verbunden. Hierzu ist dieser Kanal als Vertiefung im Lager 18 ausgebildet. In seiner ganzen axialen Länge ist der Kanal gegen die Antriebswelle 24 hin offen, wodurch das Lager 18 gleichmässig angespeist wird.

## Patentansprüche

1. Verdrängermaschine für kompressible Medien mit mehreren in einem feststehenden Gehäuse (7a, 7b) angeordneten spiralförmigen Förderräumen (11a, 11b) und mit einem den Förderräumen zugeordneten Verdrängerkörper (1-4), der auf einem gegenüber dem Gehäuse exzentrisch antreibbaren scheibenförmigen Läufer (1) derart gehalten ist, dass während des Betriebes jeder seiner Punkte eine von den Umfangswänden der Förderräume begrenzte Kreisbewegung ausführt, wozu auf der Antriebswelle (24) eine Exzenterscheibe (23) angeordnet ist, auf welcher der Läufer (1) mittels einer ölgeschmierten Lagerung gelagert ist,
dadurch gekennzeichnet,
dass für den orbitierenden Läufer (1) auf der rotierenden Exzenterscheibe (23) ein Gleitlager (22) vorgesehen ist, wobei die Ölzufuhr und die Ölabfuhr über eine Bohrung (31 resp. 53) in der Exzenterscheibe erfolgt, und dass innerhalb der Exzenterscheibe Mittel zur luftfreien Ölzufuhr in den Gleitlagerspalt angeordnet sind.

2. Verdrängermaschine nach Anspruch 1, dadurch gekennzeichnet, dass die Mittel zur luftfreien Ölzufuhr in den Gleitlagerspalt im wesentlichen aus einem Hohlraum (33) bestehen, welcher in der Exzenterscheibe (24) angeordnet und zum Schmierspalt hin offen ist, und zwar in der Winkelebene, in welcher die Exzenterscheibe ihren grössten Abstand zur Rotationsachse (34) aufweist, wobei die Ölzufuhr in den Hohlraum (33) erfolgt und wobei die Ölabfuhr und gegebenenfalls die Luftabfuhr gemeinsam über eine aus dem Hohlraum (33) abzweigende, in der Rotationsachse (34) der Antriebswelle (24) liegende Längsbohrung (53) erfolgt.

3. Verdrängermaschine nach Anspruch 2, dadurch gekennzeichnet, dass die Mündung der ölzuführenden Bohrung (31) in den Hohlraum (33) radial ausserhalb der Rotationsachse (34) der Antriebswelle (24) angeordnet ist und dass die Mündung der ölabführenden Bohrung (53) aus dem Hohlraum (33) in der Rotationsachse (34) der Antriebswelle (24) angeordnet ist,

4. Verdrängermaschine nach Anspruch 2, dadurch gekennzeichnet, dass am Umfang der Exzenterscheibe (23) ein lichter Raum (35) vorgesehen ist, welcher sich zwischen den beidseitig des Lagers (18) angeordneten Wellendichtringen (32) erstreckt und welcher die Ölräume (58) beidseits der Wellendichtringe (32) mit dem Hohlraum (33) verbindet.

5. Verdrängermaschine nach Anspruch 4, dadurch gekennzeichnet, dass der lichte Raum (35) von sichelförmiger Form ist und dass die Mittellinie der Sichel sich in der Winkelebene befindet, in welcher die Exzenterscheibe ihren grössten Abstand zur Rotationsachse (34) aufweist,

6. Verdrängermaschine nach Anspruch 2, dadurch gekennzeichnet, dass im Bereich der Radialebene des Schmierspaltes ein Kanal (40) angeordnet ist, der sich in Umfangsrichtung des Schmierspaltes vom Hohlraum (33) aus erstreckt und zwar entgegen der Drehrichtung der Antriebswelle (24).

7. Verdrängermaschine nach Anspruch 6, dadurch gekennzeichnet, dass der Kanal (40) als Vertiefung am Aussenumfang der Exzenterscheibe (23) ausgebildet ist.

8. Verdrängermaschine nach Anspruch 2, dadurch gekennzeichnet, dass das aus der Längsbohrung (53) an der luftseitigen Stirnseite der Antriebswelle (24) abströmende Öl in ein als Gleitlager ausgebildetes Wellenlager (18) geführt wird, welches Lager an seinen beiden axialen Enden durch Ölräume (54, 55) verschlossen ist, dass die beiden Ölräume (54, 55) über einen Kanal (57) miteinander kommunizieren, wobei der Kanal in seiner axialen Erstreckung gegen die Antriebswelle (24) hin offen ist.

## Claims

1. Displacement machine for compressible media, having a plurality of spiral-shaped delivery chambers (11a, 11b) disposed in a fixed housing (7a, 7b) and having a displacement body (1-4) assigned to the delivery chambers, which displacement body is held in such a way on a disc-shaped rotor (1), which can be driven eccentrically relative to the housing, that, during running, each of its points performs a circular motion limited by the peripheral walls of the delivery chambers, for which purpose there is disposed on the drive shaft (24) an eccentric disc (23) on which the rotor (1) is mounted by means of an oil-lubricated mounting, characterized in that, for the orbiting rotor (1), a slide bearing (22) is provided on the rotating eccentric disc (23), the supply of oil and evacuation of oil being effected via a bore (31 and 53 respectively) in the eccentric disc, and in that within the eccentric disc there are disposed means for the air-free supply of oil into the slide bearing gap.

2. Displacement machine according to Claim 1, characterized in that the means for the air-free supply of oil into the slide bearing gap essentially comprise a cavity (33), which is disposed in the eccentric disc (24) and is open towards the lubricating gap, to be precise in the angular plane in which the eccentric disc exhibits its greatest distance to the rotational axis (34), the supply of oil being effected into the cavity (33) and the evacuation of oil and, where appropriate, the evacuation of air being jointly effected via a longitudinal bore (53) which branches off from the cavity (33) and lies in the rotational axis (34) of the drive shaft (24).

3. Displacement machine according to Claim 2, characterized in that the mouth of the oil-supplying bore (31) into the cavity (33) is disposed radially outside the rotational axis (34) of the drive shaft (24), and in that the mouth of the oil-evacuating bore (53) from the cavity (33) is disposed in the rotational axis (34) of the drive shaft (24).

4. Displacement machine according to Claim 2, characterized in that on the periphery of the eccentric disc (23) there is provided a clear space (35), which extends between the rotary shaft seals (32) disposed on both sides of the bearing (18) and which connects the oil chambers (58) on both sides of the rotary shaft seals (32) to the cavity (33).

5. Displacement machine according to Claim 4, characterized in that the clear space (35) is crescent-shaped, and in that the centre line of the crescent is located in the angular plane in which the eccentric disc exhibits its greatest distance to the rotational axis (34).

6. Displacement machine according to Claim 2, characterized in that in the region of the radial plane of the lubricating gap a duct (40) is disposed, which duct extends from the cavity (33) in the peripheral direction of the lubricating gap, to be precise, counter to the direction of rotation of the drive shaft (24).

7. Displacement machine according to Claim 6, characterized in that the duct (40) is configured as a recess on the outer periphery of the eccentric disc (23).

8. Displacement machine according to Claim 2, characterized in that the oil flowing from the longitudinal bore (53) on the air-side end face of the drive shaft (24) is guided into a shaft bearing (18) configured as a slide bearing, which bearing is closed off at its two axial ends by oil chambers (54, 55), and in that the two oil chambers (54, 55) communicate with each other via a duct (57), the duct being open, in its axial extent, towards the drive shaft (24).

## Revendications

1. Machine à déplacement positif pour des fluides compressibles, avec plusieurs chambres de transport (11a, 11b) en forme de spirale disposées dans une enceinte fixe (7a, 7b) et avec un corps de déplacement (1-4) associé aux chambres de transport, qui est fixé sur un rotor (1) en forme de disque pouvant être entraîné excentriquement par rapport à l'enceinte, de telle manière que, pendant le fonctionnement, chacun de ses points décrive un mouvement circulaire limité par les flancs des chambres de déplacement, l'arbre d'entraînement (24) portant à cet effet un disque d'excentrique (23) sur lequel le rotor (1) est supporté au moyen d'un appui lubrifié à l'huile, caractérisée en ce qu'il est prévu, sur le disque d'excentrique (23) en rotation, un palier lisse (22) pour le rotor (1) en mouvement orbital, l'arrivée de l'huile et l'évacuation de l'huile étant assurées par un trou (31 respectivement 53) dans le disque d'excentrique, et en ce que des moyens sont disposés à l'intérieur du disque d'excentrique pour une arrivée d'huile exempte d'air dans la fente du palier lisse.

2. Machine à déplacement positif selon la revendication 1, caractérisée en ce que les moyens pour l'arrivée d'huile exempte d'air dans la fente du palier lisse se composent essentiellement d'un espace creux (33), qui est disposé dans le disque d'excentrique (24) et est ouvert vers la fente de lubrification, et en fait dans le plan angulaire dans lequel le disque d'excentrique présente sa plus grande distance par rapport à l'axe de rotation (34), l'arrivée de l'huile se faisant dans l'espace creux (33) et l'évacuation de l'huile et éventuellement l'évacuation de l'air se faisant ensemble par un trou longitudinal (53) partant de l'espace creux (33) et situé dans l'axe de rotation (34) de l'arbre d'entraînement (24).

3. Machine à déplacement positif selon la revendication 2, caractérisée en ce que l'embouchure du trou (31) d'arrivée d'huile dans l'espace creux (33) est disposée radialement en dehors de l'axe de rotation (34) de l'arbre d'entraînement (24) et en ce que l'embouchure du trou (53) d'évacuation d'huile hors de l'espace creux (33) est disposée dans l'axe de rotation (34) de l'arbre d'entraînement (24).

4. Machine à déplacement positif selon la revendication 2, caractérisée en ce qu'à la périphérie du disque d'excentrique (23), il est prévu un espace libre (35), qui s'étend entre les bagues à lèvre (32) disposées de part et d'autre du palier (18) et qui relie les chambres à huile (58) de part et d'autre des bagues à lèvre (32) avec l'espace creux (33).

5. Machine à déplacement positif selon la revendication 4, caractérisée en ce que l'espace libre (35) a la forme d'un croissant et en ce que la ligne centrale du croissant se trouve dans le plan angulaire dans lequel le disque d'excentrique présente sa plus grande distance par rapport à l'axe de rotation (34).

6. Machine à déplacement positif selon la revendication 2, caractérisée en ce que, dans la région du plan radial de la fente de lubrification, est disposé un canal (40) qui s'étend à partir de l'espace creux (33) dans la direction périphérique de la fente de lubrification, et en fait dans la direction opposée à la direction de rotation de l'arbre d'entraînement (24).

7. Machine à déplacement positif selon la revendication 6, caractérisée en ce que le canal (40) est constitué par un enfoncement à la périphérie extérieure du disque d'excentrique (23).

8. Machine à déplacement positif selon la revendication 2, caractérisée en ce que l'huile s'écoulant hors du trou longitudinal (53) dans la face d'extrémité de l'arbre d'entraînement (24) située du côté de l'air est conduite dans un palier d'arbre (18) constitué par un palier lisse, palier qui est fermé à ses deux extrémités axiales par des chambres à huile (54, 55), et en ce que les deux chambres à huile (54, 55) communiquent l'une avec l'autre par un canal (57), le canal étant ouvert dans sa longueur axiale vers l'arbre d'entraînement (24).
